Europäisches Patentamt

European Patent Office

Office européen des brevets

(11) Veröffentlichungsnummer: **0 026 767**
**B1**

(12)     # EUROPÄISCHE PATENTSCHRIFT

(45) Veröffentlichungstag der Patentschrift: **11.12.85**

(21) Anmeldenummer: **80900565.5**

(22) Anmeldetag: **26.03.80**

(86) Internationale Anmeldenummer:
**PCT/AT80/00010**

(87) Internationale Veröffentlichungsnummer:
**WO 80/02022 02.10.80 Gazette 80/22**

(51) Int. Cl.⁴: **C 05 F 5/00,** C 05 F 11/00 //
C12F3/06

(54) **VERWENDUNG VON TRAUBENTRESTER ZUR EINLEITUNG UND FÖRDERUNG AEROBER VORGÄNGE AN ABFALLSTOFFEN.**

(30) Priorität: **27.03.79 AT 2287/79**
**19.06.79 AT 4330/79**

(43) Veröffentlichungstag der Anmeldung:
**15.04.81 Patentblatt 81/15**

(45) Bekanntmachung des Hinweises auf die
Patenterteilung:
**11.12.85 Patentblatt 85/50**

(84) Benannte Vertragsstaaten:
**FR**

(56) Entgegenhaltungen:
**FR-A- 458 344**
**FR-A- 776 264**
**FR-A- 988 110**
**FR-A-1 153 363**
**FR-A-1 253 877**
**FR-A-1 560 470**
**FR-A-2 357 506**
**FR-A-2 367 824**

(73) Patentinhaber: **Graefe, Gernot, Dr. rer. nat**
**Bergstrasse 6**
**A-7082 Donnerskirchen (AT)**

(72) Erfinder: **Graefe, Gernot, Dr. rer. nat**
**Bergstrasse 6**
**A-7082 Donnerskirchen (AT)**

(74) Vertreter: **Schmidt-Evers, Jürgen (DE) et al**
**Patentanwälte Dipl.-Ing. H. Mitscherlich Dipl.-**
**Ing. K. Gunschmann Dipl.-Ing. Dr. rer. nat. W.**
**Körber Dipl.-Ing. J. Schmidt-Evers**
**Steinsdorfstrasse 10**
**D-8000 München 22 (DE)**

Courier Press, Leamington Spa, England.

## Beschreibung

Man schätzt, daß auf der Erde pro Jahn dreißigmal so viel Energie aus Biomasse frei wird, wie durch alle von Menschenhand erbauten Maschinen. Der biologische Energiefluß geht jedoch meist unauffällig vonstatten. Fein verteilt in der Humusschicht des Bodens oder in den Gewässern wird organische Substanz von Organismen unter Wärmeabgabe wieder in die Ausgangsprodukte zerlegt.

Die Rottevorgänge, die beispielsweise in der Streuschicht des Waldes auf großer Flächer ablaufen, lassen sich konzentrieren. So wird dem Gartenbesitzer empfohlen, Pflanzenabfälle in Mieten von etwa zwei Kubikmetern Rauminhalt zusammenzutragen, um in dieser Konzentration durch das Zusammentreffen vieler Stoff- und Energieumsetzungen entsprechend hohe Wärmegrade und eine lebhafte Rotte zu erzielen. Manche organische Stoffe, wie Stroh oder Holzabfälle, müssen in noch größerer Menge zusammenkommen und benötigen stickstoffhaltige Beimengungen, un eine lebhafte heiße Rotte in Gang zu setzen.

Auf hohem Temperaturniveau laufen die meisten Naturvorgänge schneller ab als auf niedrigem. Das gilt auch für die Humifizierung. Die Hitze, die sich im Zentrum des Komposthaufens aufbaut, zeigt eine lebhafte Stoffwechselaktivität thermophiler Mikroorganismen an. Die hohe Temperatur hat neben der Beschleunigung des Ab- und Umbaues organischer Substanz noch mehrere positive Aspekte: Es wird zu heiß für die Entwicklung von Fruchtfliegen u.a. ungern gesehenen Dipterenarten. Parasitenstadien, Erreger von Pflanzenkrankheiten und pathogene Keime geraten während der beißen Rotte ins Hintertreffen und werden wie Unkrautsamen abgetötet, wenn die Erhitzung stark genug ist und überall hindringt.

Es besteht daher das Bedürfnis nach Substanzen, welche in der Lage sind, den Rottevorgang organischer Materialien in Gang zu setzen, zu fördern und auf höherer Temperatur ablaufen zu lassen. Es ist zu erwarten, daß aus solchen Substanzen besonders hochwertige Dünger hergestellt werden können.

Die Erfindung schlägt vor, die aus Traubentrester durch einen aeroben Verrottungsvorgang gewonnenen Traubenkerne als eine solche fördernde Substanz zu benutzen.

Die Erfindung bezieht sich demnach auf die Verwendung eines Materials, das im wesentlichen Umfang aus zerkleinerten, ihren natürlichen Gehalt an Ölen aufweisenden Traubenkernen, die mit Humicola- und/oder Actinomycetensporen behaftet sind, und im übrigen aus anderen Bestandteilen der Traubentrester besteht, zur Einleitung bzw. Förderung aerober Vorgänge an pflanzlichen oder tierischen Abfallstoffen.

Das erfindungsgemäß verwendete Material kann angewendet werden, indem es im Zentrum oder unterhalb desselben einer gehäuft gelagerten Menge pflanzlicher Abfallstoffe als Ausgangsherd des Verrottungsvorganges in konzentrierter Form angeordnet wirt, und gegebenenfalls dadüberhinaus ein Teil des Materials in der Menge des pflanzlichen Abfallstoffes verteilt wird. Diese Anwendung eignet sich für Abfallsstoffe, die Stroh, Baumrinde, Gartenabfälle, abagetragenen Champignonkompost, Holzspäne od. dgl., enthalten. Besonders wertvoll ist die Anwendung des Materials zur Heißverrottung von menschlichen oder tierischen Fäkalien sowie von Unkraut. Das Material kann aber auch zur geruchsfreien Verrottung stark eiweißhältiger Abfälle, z.B. Champignonabfälle, Tierkadaver u.dgl. benutzt werden.

Im folgenden werden die Herstellung des Kernschrots, seine Eigenschaften, Anwendungen und Wirkungen näher beschrieben.

Die Gewinnung der Traubenkerne beginnt mit einer Lagerung der frischen Traubentrester zwischen Holzwänden, die innen mit Aluminium-Streckmetall ausgekleidet sind Zwischen dem Holzpfosten oder -brettern, die die Außenwand bilden, sollen schmale Belüftungsspalten liegen. Die Streckmetall-Matten an den Innenseiten sind so auszurichten, daß trotz gleichmäßiger Belüftung ein Maximum an Feuchtigkeit an den schrägen Metallflächen kondensiert und in die wermen Trestermassen zurückgeleiter wird.

In den frischen Preßrückständen steigt die Temperatur langsam; die Hefepilze vermehren sich und vergären den Zuckergehalt der Traubentrester zu Alkohol und Kohlendioxid. Gleichzeitig sorgen verschiedene anaerob lebende Bakterienarten für Gärungsvorgänge, die zu organischen Säuren führen. Während dieser Phase neigen vor allem kleinere Trestermassen dazu, auf einem Temperaturniveau um 45°C zu verharren. Nun tritt die beschriebene Spezialwandung aus Holz und Aluminium-Streckmetall entscheidend in Funktion, inden sie einerseits für eine gewisse Isolierung und anderseits für eine mäßige Belüftung durch die Streckmetallmatten sorgt. Unter diesen Bedingungen entwickeln sich Humicola und aerobe wärmeliebende Actinomycetenarten, die mit ihrem weißlichgrauem Mycel von außen in das Substrat hineinwachsen und damit ganz wesentlich mithelfen, die Temperatur in allen Bereichen über 50°C hinaufzutreiben. Die vorhandene saure Reaktion von pH 4 bis 5 entspricht ihren Anforderungen.

Sobald der Bereich von 50°C überschritten ist, beginnen Alkohol einerseits und organische Säuren anderseits rasch miteinander zu reagieren. Es entstehen Ester, die dem Material eine kräftig braune Farbe und einen eigenen, aromatischen Gerüch verleihen. In diesem Zustand sind die vorher geruchsbelästigend wirkenden organischen Säuren durch die Veresterung chemisch gebunden. Die Temperaturen liegen in dieser Phase weit oberhalb von 33°C, so daß eine Massenvermehrung von Essigfliegen vereitelt ist.

Mit der systematischen Veresterung ist der erste Verfahrensschritt abgeschlossen. Das Ergebnis ist ein relativ gut lagerbares Material, das allein schon durch die stabile Esterkomponente einen hohen Energiegehalt von mehr als 17.000 k Joule/kg besitzt. In der unmittelbar oder im Anschluß an eine Zwischenlagerung nachfolgenden Phase 2 des Verfahrens wird dieses Material als Energieträger eingesetzt, indem es vollständig von dem Mycel der Humicola und der schon erwähnten thermophilen Actinomycetenarten durchwachsen wird.

Im Zentrum des veresterten Trestermaterials lassen sich Wärmetauscher einbauen, due durch einen Luftstrom oder einen Wasserkreislauf Wärme nach außen abgeben. Man kann auch ein Gefäß im Zentrum anordnen und mit der Wasserleitung verbinden. Das Wasser wird dadurch bis auf 64°C angewärmt. Ein Kubikmeter Trester, der vollständig von Humicola und den Actinomycetenarten durchwachsen wird, gibt einen Monat lang Wärme ab. Als ungefähre Regel darf man annhmen, daß zwei Kubikmeter zweo Monate und fünf Kubikmeter bis zu fünf Monaten heiß bleiben, ohne daß die Humicola- und Actinomycetenrotte durch die ständige Wärmeabfuhr vorzeitig zum Erliegen kommt.

Man kann so einen Winter lang einen kleinen Raum oder einen Stall temperieren, ohne zwischendurch Arbeit oder Energie einsetzen zu müssen. Auch die Warmwasserbereitung funktioniert über lange Zeiträume und letztlich bis zur nächsten Weinlese, wenn nach geschickter Lagerung neue Packungen von verestertem Material um den Wasserbehälter gegeben werden. Am angenehmsten ist die Wärmenutzung jedoch bald nach der Lese, wenn die kalte Jahreszeit beginnt, dann ist die mikrobielle Freisetzung der in der warmen Vegetationszeit chemisch gebundenen Sonnenenergie besonders erwünscht.

Werden die Trester nach Abschluß der Phase 2 gemischt, so erreichen sie nach zwei bis drei Tagen Temperaturen von 68 bis 84°C. Diese Nachrotte ist für eine lang anhaltende, gleichmäßige Wärmenutzung nicht geeignet, ist aber für die Humifizierung der Schalen- und Fruchtfleichreste besonders wichtig. Am Ende nehmen die Trester eine dunkle Farbe an. Sporen verschiedener thermophiler Mikroorganismen bleiben auf der Oberfläche der Kerne im Ruhestadium, bis sie in einem weiteren Verrottungsvorgang wieder in Funktion treten.

Nun wird das Material getrocknet. Dabei kann die Restwärme der Nachrotte und die Abwärme einer darunter ablaufenden Hauptrotte der Phase 2 benutzt werden.

Durch einen Siebvorgang werden die Traubenkerne von den bereits humifizierten Tresterbestandteilen abgetrennt. Etwa 40% des Volumens entfällt dabei auf einen gebrauchsfertigen organischen Dünger und 60% auf Traubenkerne als Energieträger, die über längere Zeit aufbewahrt werden können.

Vor der Nutzung der Kerne werden diese geöffnet, z.B. durch eine Schrotung der Kerne. Die Kerne sind Samen, an deren äußerer Wand entsprechend der vorherigen Behandlung Dauerstadien thermophiler Mikroorganismen sitzen, während die innere Wand den Keimling und die Keimblätter umschließt. Letztere sind durch die Hitze abgestorben und befinden sich im Anfangsstadium eines langsamen Abbaues. Durch Trocknung werden die schleichenden Abbauvorgänge zum Erliegen gebracht. Durch das Traubenkernöl ist der Kerninhalt sehr energiereich, und man kann mehr als 20.000 k Joule/kg rechnen. Außerdem enthält er sämtliche für den Aufbau eines Sämlings notwendigen Nährstoffe und damit auch die für ein Mikrobenwachstum erforderlichen Substanzen. Wenn beim Schroten die einzelnen Bestandteile der Traubenkerne dem Sauerstoff der Luft und einer Feuchtigkeit von mehr als 23% ausgesetzt sind, setzen die lebhaften Rottevorgänge unverzüglich ein. Die Befeuchtung des Kernschrots erfolgt mit kaltem oder wermem Wasser. Nun kann der feuchte Kernschrot am Anwendungsort eingesetzt werden. Durch das Öffnen der Kerne sind die Kikrobensporen von der Oberfläche mit den öl- und reservestoffhaltigen Samenresten aus dem Inneren zusammengekommen. Im Verlauf einiger Stunden setzt eine Rotte ein, die ebenso wie Phase 2 einen systematischen Abzug von Wärme erlaubt, z.B. zur Raumtemperierung, zur Warmwasserbereitung, vor allem aber zur Klimatisierung, und die Kohlendioxid-Versorgung von Pflanzenkulturen unter Glas und unter Plastikfolien. Der Kernschrot in den Behältern aus Streckmetall gibt einerseits Wärme ab und versorgt die Glaschausluft mit $CO_2$, so daß eine Lüftung für den Kohlendioxid-Nachschub, die mit Wärmeverlusten verbunden wäre, überflüssig wird.

Kernschrot kann in Materialien eingelagert werden, die von sich aus die Schwelle zu einer lebhaften heißen Rotte nicht überschreiten können, um sie in den thermophilen Bereich hineinzuziehen oder ihre Verrottung zu beschleunigen. Man kann Nester einbauen, für die bereits ein Rauminhalt von 0,02 m³ ausreicht, in dem sich innerhalb des Kernschrotkörpers rasch hohe Temperaturen aufbauen, man kann eine gleichmäßige Durchmischung machen, oder bevorzugt eine Schicht im unteren Bereich, die von unten das darüberliegende Substrat aufheizt. Die wichtigste Wechselwirkung besteht im Wärmetausch, das nächstwichtigste mag die Abgabe der Sporen thermophiler Mikroorganismen sein, die in der Nachbarschaft auskeimen und mit dem feuchten Warmluftstrom nach oben mitgetragen werden. Man kann aber das zu verrottende Material auch allseits von Kernschrot umgeben. Das empfiehlt sich bevorzugt bei eiweißreichen Substanzen, bei Fleischabfällen, Pilzabfällen (Champignons) oder unangenehm riechenden Fäkalien. Fleischabfälle und Tierkadaver können z.B. in einem Kunststoffsack auf einer trockenen Torfmullunterlage aufgelegt und mit Kernschrot bedeckt werden. Kernschrot eignet sich aber auch als Filterschicht für Urin und als geruchsbindende Unterlage für stark riechende tierische Kot- und Urinplätze. Die Verwendung des Kernschrots verhindert wirksam ein Geruchsbelästigung.

Durch die Wärme- und Sporenabgabe ist der Kernschrot häufig in der Lage, den umgebenden Substanzen eine so rasche Abbaugeschwindigkeit aufzuzwingen, daß man fast von katalysatorischen Fähigkeiten sprechen kann.

Ist die Mischung relativ dicht gepackt, so pflegt ein thermophiler Pilz der Gattung Humicola die Leitform zu sein. Liegt das Material ein wenig luftiger, so haben eher Actinomyceten größere Entwicklungschancen. Derlei Methoden lassen sich in zahllosen Variationen anwenden, alle lassen sich für ein effektvolles Recycling verwenden.

Ein Recyclingbeispiel ist der jährlich im Vorfrühling stattfindende Rebschnitt in den Weingärten. Die Reben enthalten bedeutende Mengen an Nährstoffen und Spurenelementen, sie verrotten nicht leicht und werden größtenteils am Weingartenrand verbrannt; danach wird die Asche ziellos vom Wind verblasen. Es ist deshalb zu empfehlen, die Rebenasche nach dem Verbrennen mit etwa einem gleichen Teil feuchten Kernschrots zu überdecken, zu vermischen und in einem luftigen Behältnis gemeinsam heiß verrotten zu lassen. Ein Teil der mineralischen Bestandteile der Rebenasche wird dadurch organisch gebunden, ein Teil wird an den Huminstoffmolekülen gehalten. Außerdem schafft das Mycel der Mikroorganismen eine verbindende Struktur. Der Aschenbestandteil kann nicht mehr verblasen werden, wenn er eingebunden in den Kernschrot in den Weingarten zurückgebracht wird. Die Reben können auch in gehäckselter Form dem frischen Kernschrot zugegeben und mit diesem verrottet werden.

In einer gemeinsamen heißen Rotte kann unangenehm riechender Geflügelmist als Zuschlag zum Kernschrot (bis zu 40% des Kerngewichtes) unangenehme Eigenschaften verlieren und gleichzeitig den Phosporgehalt der gemeinsam verrotteten Gesamtmasse vermehren, da der Phosphatgehalt der Kerne etwa 0,7 % der Trockensubstanz beträgt. Zugleich werden darin versteckte Ektoparasiten, enthaltene Wurmeier, Kokzidienkeime u.dgl. abgetötet. Während dieser aktiven Phase können die verschiedensten Komponenten miteinander reagieren und Spezialdünger bilden oder besondere spurenelementangereicherte Substrate hervorbringen.

Kleinere Substanzmengen, die durch die geschilderten Hilfsmittel besonders heiß werden, sind in Gefahr, an den großen Oberflächen rasch die vorhandene und die bei der aeroben Rotte entstehenden Feuchtigkeitsmengen zu verlieren. Aus diesem Grunde sind Wandelemente, die zur Rückführung von Feuchtigkeit führen, wichtig. Auch die Bedeckung spielt eine Rolle. Als einfachste und zweckmäßigste Lösung wird eine Plastikfolie so geschnitten, daß sie ein wenig größer ist als die obere Öffnung des Behältnisses; die Plane wird darüber gebreitet und mit einem entsprechend kleineren Metallring beschwert, so daß in der Mitte ein Hut entsteht, in den der feuchtwarme zentrale Aufwind aus dem heißen Rottezentrum hineinsteigt, an der kühleren Folieninnenseite Kondenswasser abgibt, das seitlich abfließt und an der Folienstelle, an der der Metallring sozusagen eine Tropfnase in der Folie formt, in das Material zurückfließt und zwar nicht im unmittelbaren Randbereich, sondern nicht allzuweit vom Zentrum entfernt, wo durch die Kaminwirkung in den Zwischenräumen des Materials die im etwas tiefer liegenden Bereich die bedeutenderen Feuchtigkeitsverluste entstehen.

Während in frei liegenden Mieten die Oberfläche im wesentlichen kälter ist und Unkrautsamen und unerwünschte Keime aus diesem Bereich nur nach mehrmaligem Umsetzen mit immer größerer Wahrscheinlichkeit alle einmal in heißere Zentralzonen gekommen sind, läßt sich mittels Kernschrot ein heißer Körper auch in ruhenden Silo bilden, der alle Teile einmal erfaßt. Man verwendet Wandelemente aus Streckmetall-Matten, die mittels beliebiger Vorrichtungen seitlich aneinander gehängt werden können. Man bildet einen Doppelring, indem man im äußeren Ring ein zusätzliches Wandelement hineingibt. Den Raum zwischen beiden Wänden füllt man mit feuchtem Kernschrot und auf dem Boden, innerhalb des inneren Ringes, trägt man eine 5—10 cm starke Schicht des gleichen Kernschrots auf, von der ebenso eine heizende Wirkung ausgeht, wie von der kernschrotgefüllten Doppelwand. Da die Warmluft aufsteigt und bei der Kondensation von Wasserdampf innerseits der Plastikfolie zusätzliche Wärme frei wird, tritt eine vollständige Erhitzung der gesamten Masse ein, wenn man sorgfältig auf eine vollständige Folienbedeckung des inneren Raumes achtet. Die Anordnung mit Doppelwand dient besonderen Zwecken, wobei natürlich eine größere Menge Kernschrot benötigt wird. Für den normalen Gartenbesitzer genügt der einfache zusammensetzbare Ring, je nach Abfallmenge. Das Streckmetall muß nur wegen der Rückgewinnung des Wassers richtig ausgerichtet sein. Dann ist die Silowand auch mehr als eine luftduchlässige Wandung, die hauptsächlich der Ordnung im Garten dient. Um auch kleinen Gartenabfall-Quantitäten thermophile Bedingungen aufzuzwingen, genügt es, im Zentrum, möglichst unterhalb der Mitte ein Nest mit feuchtem Kernschrot anzulegen. Das Besondere ist, daß kein anderes organisches Material bekannt ist, mit dem man in so kleinen Quantitäten so lang anhaltende thermophile Bedingungen schaffen und so intensiven Einfluß auf die Einbindung anderer organischer und anorganischer Materialien ausüben kann, ganz abgesehen von der Beschleunigung der Ab-, Um- und Aufbauvorgänge in den Kompostmassen. Im Vergleich dazu haben die Wandelemente eine untergeordnete Bedeutung.

Diese Methode hat gegenüber den entsprechenden Vorgängen im Komposthaufen den Vorteil, daß eine vorbestimmte Mischung aus unterschiedlichen Bestandteilen gewonnen werden kann, die unter kontrollierten Bedingungen auch bis zur kleinsten Einheit mikrobiell aneinander gebunden sind.

Ein weiteres Anwendungsgebiet ist die Champignonzucht. Der Champignon besitzt eine niedrige Vorzugstemperatur. Die ganzjährige gewerbsmäßige Zucht dieses Pilzes findet deshalb in Kellern oder in entsprechend klimatisierten Räumen statt. Wird der Chempignonkompost nach mehrmaligen Ernten abgetragen, so ist das Substrat von dem Pilzmycel vollständig durchsponnen. Dieses Mycel ist recht lebenskräftig, auch wenn es mit dem Umwenden und Durcharbeiten des Kompostes vielfach zerrissen wird, stirbt es keinesfalls schnell ab, vor allem nicht bei den Außentemperaturen des Winterhalbjahres oder der Übergangszeiten.

Ein für gertenbauliche oder landwirtschaftliche Zwecke eingesetzter Champignonkompost sollte gut verrottet sein. Das gilt vor allem auch für das Mycel selbst, das in seinem Einweiß einen bedeutenden Teil des vorhandenen Stickstoffes gebunden hält. Sein Abbau kann jedoch auf rascheste Weise eingeleitet werden, indem luftige Behältnisse mit mindestens 50 Liter Inhalt mit Kernschrot angefüllt und an zentraler Stelle in Abständen in die Mieten mit abgetragenem Champignonkompost eingebaut werden. Der Kernschrot geht rasch zu einer heißen Rotte über und sorgt an den Behälterwänden, die als Wärmetauscher wirken, dafür, daß der außen anliegende Champignon-Kompost rasch Temperaturen von über 30°C erlangt. Das Substrat selbst hat vor der Beimpfung mit Champignon beim Pasteurisieren bereits eine heiße Rotte durchgemacht, während der alle leicht abbaubaren Bestandteile des Kompostes schon von den thermophilen Mikroorganismen aufgenommen worden sind. Bei einer neuerlichen Temperaturerhöhung ist es dieses Mal das Champgnonmycel mit seinen um 15°C liegenden Vorzugstemperaturen, das am empfindlichsten getroffen wird. Die wärmespendenden Tresterbehälter geben durch die Öffnungen gleichzeitig Sporen thermophiler Actinomyceten an das benachbarte Substrat ab, die sogleich an die Verarbeitung der Pilzsubstanz gehen. Damit wird zusätzliche Wärme erzeugt, die nach außen weiterwandert und weiter an der Peripherie den Zusammenbruch des wärmeempfindlichen Mycels hervorruft.

Nach dieser kurzen Initialphase, die einen erheblichen Zeitgewinn für die Ausreifung des Kompostes darstellt, können sich beliebige Dauertemperaturen einstellen, die auf jeden Fall zu günstigeren Eigenschaften des Materials führen. Nach Untersuchungen werden vom Champignonmycel Stoffwechselprodukte ausgeschieden, die einen hemmenden Einfluß auf die Keimung und auf das Wachsen junger Pflanzen ausüben. Beim Nachkompostieren verschwinden diese hemmenden Stoffwechselprodukte. Grundvoraussetzung für die rasche Abfolge dieser Geschehnisse ist jedoch die kurzzeitige, möglichst vollständige Abtötung des lebenden Pilzgespinstes durch thermophile Mikroorganismen vereint mit hohen Umgebungstemperaturen.

Verzichtet man auf die gezielte Lenkung in thermophile Bahnen, so dauert der Vorgang um ein Vielfaches länger: Eingebettet in das Substrat geht der Abbau des Mycels unauffällig und langsam vor sich.

Anders ist es mit den Pilzabfällen, die bei der Ernte anfallen, an denen höchstens kleine Mengen von Deckerde haften. Hier tritt nach einiger Zeit ein mikrobieller Eiweißabbau ein, der von äußerst unangenehmen Gerüchen begleitet ist. Hier empfiehlt sich eine Einstreu von Kernschrot, der in besonderer Weise dazu befähigt ist, das umgebende Substrat rasch zu einer heißen Rotte hinzuführen und gleichzeitig für eine Bindung unangenehmer Fäulnisgerüche zu sorgen.

So wird samentragendes Unkraut zur restlosen Beseitigung der Keimfähigkeit zusammen mit Kernschrot heiß verrottet. Auch menschliche Fäkalien können zur sicheren Abtötung von Wurmeiern und phathogenen Keimen zusammen mit Kernschrot heiß verrottet werden. Ist das Material über 60°C heiß geworden, so kann es später selbst für den Gemüseanbau verwendet werden. Entsprechendes gilt für tierische Fäkalien, bei denen eine Abtötung von Parasiten oder ihren Eiern wünschenswert erscheint.

In der AT—PS 344 210 wurde dargelegt, daß der Energiegehalt der Traubentrester in zwei verschiedenen, unter Umständen zeitlich weit auseinanderliegenden Arbeitsgängen genutzt werden kann. Zunächst macht die gesamte Trestermasse eine lebhafte heiße Rotte durch, dann werden die Kerne abgesondert, schließlich geschrotet, befeuchtet und einer neuerlichen heißen Rotte unterworfen. Die abgesonderten und geöffneten Traubenkerne zeigen eine besondere Eignung, auch in kleinen Quantitäten heiß zu werden und Pflanzenkulturen unter Glas und Folie mit Wärme und Kohlendioxid zu versorgen. Sie sind dementsprechend schnell erschöpft.

Es gibt jedoch Anwendungen, bei denen es erwünscht ist, die Bioenergie, die bei der Rotte frei wird, in einer langanhaltenden Phase zu nutzen. Dieses Interesse besteht vor allem dann, wenn das Material zur Beschickung von Mistbeeten benutzt wird und in seiner Wärmeabgabe besonders lange anhalten soll. Es besteht aber auch dann, wenn Warmwasserbereitung und Raumtemperierung mit relativ kleinen Trestermengen und dennoch langanhaltenden Zeiten der Wärmeabgabe aufrechterhalten werden sollen.

Werden Traubentrester einer aeroben Verrottung ausgesetzt, bei der in einer ersten Phase der Zuckergehalt der Trester in Alkohol umgewandelt und dieser einer Veresterung unterworfen wird, und werden sodann die Kerne geöffnet, so ergibt das gesamte, auch die geöffneten Kerne enthaltene Zwischenprodukt ein erfindungsgemäß zu verwendendes Material, das neben dem Kernschrot erhebliche Mengen anderer Bestandteile der Traubentrester aufweist. Es ist zweckmäßig, die erste Phase in Silos durchzuführen und bei der Entnahme gleichzeitig oder anschließend eine auch die Kerne erfassende Zerkleinerung, z.B. mittels einer Silofräse, vorzusehen und das Material an den Ort seiner Verrottung zu bringen, vorzugsweise in Rottebehälter zu füllen.

Wie oben dargelegt, erfolgt die Rotte der Trester und Kerne gemäß der AT—PS 344 210 sehr lebhaft und es war zu erwarten, daß die gemeinsame Rotte der geöffneten Kerne und des übrigen Trestermaterials noch schneller vor sich geht. Überraschenderweise verläuft sie jedoch langsamer und gleichmäßiger als die beiden Einzelrottevorgänge. Darüberhinaus ergibt die erfindungsgemäße Verrottung einen sofort verarbeitbaren Dünger, da auch die Kerne verrottet sind und einen unauffälligen Bestandteil der Erdkrumme bilden.

Die gleichzeitige Verrottung der geöffneten Traubenkerne und der übrigen Bestandteile des Tresters bietet sich vor allem für kleinere Anlagen an. Die Preßrückstände werden in einen Rundsilo geleert, dessen Wand aus senkrechten Holzpfosten besteht, zwischen denen Luftschlitze von etwa 6 mm Weite vorgesehen sind. Die Innenseite der Wand ist ausgekleidet mit Aluminium-Streckmetall mit einer Längsdiagonale von etwa 20 mm, einer Querdiagonale von ca. 3 mm und einer Stegbreite von etwa 2—3 mm. Die Anordnung des Streckmetalles entspricht den Angaben der AT—PS 347 978. In diesem Behälter sollen während und nach der Lese Temperaturen von 50 und mehr Grad Celsius erreicht werden, um zur Esterbildung zu führen. Danach wird eine Silofräse eingesetzt, die je nach Bedarf dem Silo die gewünschte Trestermenge entnimmt, wobei sie innerhalb der Silofräse ein schnell rotierendes Gebläse mit schmalen flachgestellten Ventilatorflügeln passiert, so daß die Kerne nahezu vollständig ergriffen und zerschlagen werden.

Bei der lebhaften heißen Rotte zu Beginn der zweiten Phase kommt den Äthylestern, die während der ersten Phase entstanden sind, die größte Bedeutung zu, indem sie die Primärbesiedlung durch die thermo- und acidophilen Actinomycetenarten sowie Humicola fördern. Nachdem diese Arten das Substrat durchwachsen haben, folgen zahlreiche Mikrobenarten, die nach und nach die noch unangegriffenen Reservestoffe aus dem Samen einschließlich des Öls abbauen und in Wärme umwandeln und zusätzlich auch das überaltete Mycel von der Primärbesiedlung verarbeiten. Mit dem relativ kleinen Volumen von 500 bis 1000 Liter Trester können Wärmequellen geschaffen werden, die weitaus länger als vier Wochen aktiv sind und je nach Bedarf über die gesamte Wachstumszeit von Salat oder anderen "Mistbeet"-Kulturen für die notwendige Wärme sorgen.

Das nach der erstem Phase erhalten Zwischemprodukt wird erzindungsgemäß dazu benutzt, um den Rottevorgang organischer Materialien in Gang zu setzen, zu fördern und auf höherer Temperatur ablaufen zu lassen. Es eignet sich hierzu in gleicher Weise wie der Kernschrot.

In Zentrum des veresterten Materials lassen sich Wärmetauscher einbauen, die durch einen Luftstrom oder einen Wasserkreislauf Wärme nach außen abgeben. Man kann auch ein Gefäß im Zentrum anordnen und mit der Wasserleitung verbinden. Das Wasser wird dadurch bis auf 64°C angewärmt, ohne daß die Humicola- bzw. Actinomycetenrotte durch die ständige Wärmeabfuhr vorzeitig zum Erliegen kommt.

Das erfindungsgemäße Zwischenprodukte kann in Materialien eingelagert werden, die von sich aus die Schwelle zu einer lebhaften heißen Rotte nicht überschreiten können, um sie in den thermophilen Bereich hineinzuziehen oder ihre Verrottung zu beschleunigen. Man kann Nester einbauen, für die bereits ein Rauminhalt von 0,005 $m^3$ ausreicht, in denen sich rasch hohe Temperaturen aufbauen, man kann eine gleichmäßige Durchmischung vornehmen, oder bevorzugt eine Schicht im unteren Bereich, die von unten das darüberliegende Substrat aufheizt. Die wichtigste Wechselwirkung besteht im Wärmetausch, das nächstwichtigste mag die Abgabe der Sporen thermophiler Mikroorganismen sein, die in der Nachbarschaft auskeimen und mit dem feuchten Warmluftstrom nach oben mitgetragen werden. Man kann abder das zu zu verrottende Material auch allseits mit dem Zwischenprodukt umgeben. Das empfiehlt sich bevorzugt bei eiweißreichen Substanzen, bei Fleischabfällen, Pilzabfällen (Champignons) oder unangenehm riechenden Fäkalien.

Fleischabfälle und Tierkadaver können z.B. in einem Kunststoffsach auf einer trockenen Torfmullunterlage aufgelegt und mit dem Material bedeckt werden. Dieses eignet sich aber auch als Filterschicht für Urin und als geruchsbindende Unterlagen für stark riechende tierische Kot- und Urinplätze. Die Verwendung des Zwischenproduktes verhindert wirksam eine Geruchsbelästigung.

**Patentansprüche**

1. Verwendung eines Material, das im wesentlichen Umfang aus zerkleinerten, ihren natürlichen Gehalt an Ölen aufweisenden Traubenkernen, die mit Humicola- und/oder Actinomycetensporen behaftet sind, und im übrigen aus anderen Bestandteilen der Traubentrester besteht, zur Einleitung bzw. Förderung aerober Vorgänge an pflanzlichen oder tierischen Abfallstoffen.

2. Verwendung des Materials zur Einleitung bzw. Förderung aerober Vorgänge gemäß Anspruch 1, dadurch gekennzeichnet, daß das Material im Zentrum oder unterhalb desselben einer gehäuft gelagerten Menge des Abfallstoffes angeordnet wird.

3. Verwendung des Materials nach Anspruch 2, dadurch gekennzeichnet, daß zusätzlich das Material in der Menge des Abfallstoffes verteilt wird.

4. Verwendung des Materials nach Anspruch 2 oder 3, dadurch gekennzeichnet, daß als pflanzliche Abfallstoffe Stroh, Baumrinde, Gartenabfälle, abgetragener Champignonkompost, Holzspäne und Unkraut verwendet werden.

5. Verwendung des Materials nach Anspruch 2 oder 3, dadurch gekennzeichnet, daß als Abfallstoff menschliche oder tierische Fäkalien verwendet werden.

6. Verwendung des Materials nach Anspruch 2 oder 3, dadurch gekennzeichnet, daß stark eiweißhaltige Abfallstoffe, z.B. Champignonabfälle und Tierkadaver verwendet werden.

## Revendications

1. Utilisation d'une matière qui est constituée pour l'essentiel, de pépins de raisins fragmentés, qui présentent leur teneur naturelle en huile et qui sont affectés de spores humicola et/ou actinomycète et, en outre, d'autres constituants du marc de raisin, pour initier et pour favoriser des processus aérobies dans des déchets végétaux ou animaux.

2. Utilisation de la matière pour initier ou pour favoriser des processus aérobies suivant la revendication 1, caractérisée en ce que la matière est disposée au centre ou en-dessous du centre d'une quantité de déchets mis en tas.

3. Utilisation de la matière suivant la revendication 2, caractérisée en ce qu'en outre, la matière est répartie dans la masse du déchet.

4. Utilisation de la matière suivant la revendication 2 ou 3, caractérisée en ce que, comme déchets végétaux, sont utilisés de la paille, de l'écorce d'ardes déchets de jardin, du compost de champignon ayant déjà servi, des copeaux de bois et des mauvaises herbes.

5. Utilisation de la matière suivant la revendication 2 ou 3, caractérisée en ce que sont utilisées, comme déchets, des matières fécales d'origine humaine ou animale.

6. Utilisation de la matière suivant la revendication 2 ou 3, caractérisée en ce que sont utilisés, comme déchets très protidiques, des déchets de champignon et des cadavres d'annimaux.

## Claims

1. Use of a material consisting essentially of crushed grape seeds, having their natural oil contents, that are populated by Humicola and/or spores of actinomycetes, and which material otherwise consists of other components of the grape marc, for starting and/or promoting aerobic processes in vegetable and animal waste.

2. Use of said material for starting and/or promote aerobic processes according to claim 1 characterized in that the material is placed in the centre or therebelow of a quantity of waste stored in heaps.

3. Use of said material according to claim 2 characterized in that the added material is being distributed in the quantity of waste.

4. Use of said material according to claim 2 or 3 characterized in that the vegetable waste used are straw, bark, garden compost, removed champignon compost, wood chips, and weeds.

5. Use of said material according to claim 2 or 3 characterized in that the waste used are human or animal feces.

6. Use of said material according to claims 2 or 3 characterized in that highly albuminous waste is used, such as champignon waste and animal cadavers.